Europäisches Patentamt

European Patent Office

Office européen des brevets

(19)

(11) Numéro de publication: **0 090 702**
**A1**

# (12) DEMANDE DE BREVET EUROPEEN

(21) Numéro de dépôt: **83400534.0**

(22) Date de dépôt: **15.03.83**

(51) Int. Cl.³: **H 04 N 3/24, H 04 N 5/68**

(30) Priorité: **23.03.82 FR 8204918**

(43) Date de publication de la demande: **05.10.83**
**Bulletin 83/40**

(84) Etats contractants désignés: **DE GB IT SE**

(71) Demandeur: **THOMSON-CSF TELEPHONE,**
**146, Boulevard de Valmy, F-92707 Colombes (FR)**

(72) Inventeur: **Facon, Michel, THOMSON-CSF SCPI 173, Bld.**
**Haussmann, F-75379 Paris Cedex 08 (FR)**
Inventeur: **Julien, Robert, THOMSON-CSF SCPI 173, Bld.**
**Haussmann, F-75379 Paris Cedex 08 (FR)**
Inventeur: **Resconi, Enrico, THOMSON-CSF**
**SCPI 173, Bld. Haussmann, F-75379 Paris Cedex 08 (FR)**

(74) Mandataire: **Chaverneff, Vladimir et al, THOMSON-CSF**
**SCPI 173, Bld Haussmann, F-75379 Paris Cedex 08 (FR)**

(54) **Dispositif de commande d'électrode d'un canon électronique pour tube cathodique.**

(57) L'invention concerne un dispositif de commande d'électrode d'un canon électronique pour tube cathodique.

Le dispositif comprend un circuit de commande de luminosité (1) permettant d'ajuster la tension appliquée sur une électrode (G1) du tube; un circuit d'effacement (2) du spot permettant de faire chuter cette tension pendant un intervalle de temps déterminé et de protéger le tube lors de l'extinction en maintenant ce niveau de tension pendant une durée suffisamment longue.

Application aux tubes cathodiques.

## DISPOSITIF DE COMMANDE D'ELECTRODE D'UN CANON ELECTRONIQUE POUR TUBE CATHODIQUE

La présente invention se rapporte aux dispositifs de commande d'électrode d'un canon électronique pour tube cathodique.

Les fonctions d'un canon à électrons sont parfaitement connues. On rappelle que ce rôle est double. Il doit d'abord émettre les électrons : cette émission provient de la cathode chauffée à haute température. Il doit ensuite imposer à ces électrons une trajectoire telle que tous viennent heurter l'écran en un même point : c'est un problème d'optique électronique, résolu grâce aux anodes et à la distribution de champ électrique qu'elles créent.

Pour des questions de fiabilité (durée de l'écran) et pour des raisons de confort de l'utilisateur, trois fonctions distinctes sont demandées dans toute application utilisant un écran de visualisation à tube cathodique.

La première fonction consiste à faire varier la luminosité du spot.

La deuxième fonction consiste à effacer le spot pendant son retour à la fin du balayage de l'écran.

La troisième fonction consiste à obtenir une extinction quasi instantanée du spot dès qu'il se produit une coupure de l'alimentation de l'écran.

Pour faire varier la luminosité, il est connu que l'on agit sur le Whenelt, électrode particulière qui contrôle le débit de l'émission électronique. Pour cela le Whenelt est porté à un potentiel négatif par rapport à la cathode et tend ainsi à repousser les électrons. Selon son potentiel plus ou moins négatif, le passage des électrons sera accéléré ou au contraire arrêté, permettant donc de régler l'intensité du faisceau d'électrons.

Les deux autres fonctions évoquées précédemment sont réalisées généralement à l'aide de circuits assez complexes et encombrants.

La présente invention propose un dispositif simple et peu onéreux permettant d'obtenir à la fois une variation de la luminosité du spot, un effacement de ce spot lors de son retour à la fin du balayage de l'écran et une extinction quasi instantanée du spot lors d'une coupure de l'alimentation de l'écran de visualisation.

L'invention propose donc un dispositif de commande d'électrode d'un canon électronique comprenant un circuit de commande de luminosité relié à une électrode et un circuit d'effacement relié à cette électrode, caractérisé en ce que le circuit de commande de luminosité comprend :

- un pont diviseur alimenté par une source de tension continue et permettant d'obtenir un premier niveau de tension déterminé ;

en ce que le circuit d'effacement comprend :

- un interrupteur recevant un signal de commande pour ouvrir ou fermer cet interrupteur ; le premier niveau de tension déterminé variant en fonction de la position de cet interrupteur ; et

- un circuit de protection relié au circuit de commande de luminosité et à l'interrupteur pour maintenir un deuxième niveau de tension déterminé sur l'électrode pendant une durée également déterminée.

Les particularités et avantages de la présente invention apparaîtront dans la description qui suit, non limitative et illustrée par les figures annexées qui représentent :

- figure 1, un schéma de réalisation selon l'invention ;

- figure 2, un schéma équivalent du circuit selon l'invention lors de l'extinction de l'alimentation de l'écran ;

- figure 3, un diagramme des variations de tension et de courant au cours du temps.

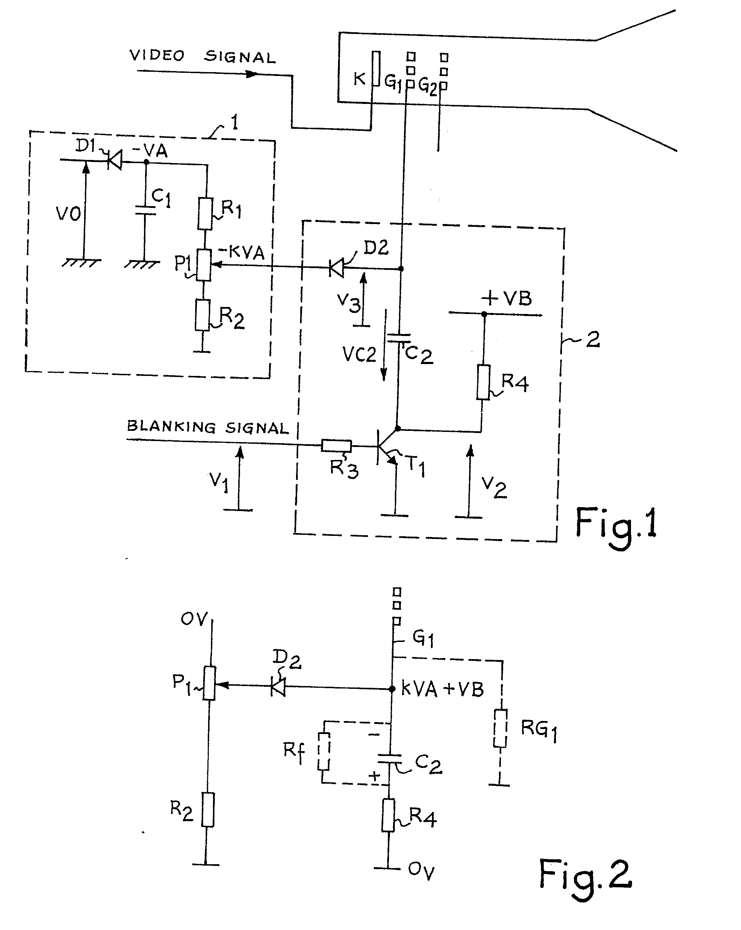

Le schéma du circuit de commande d'électrode selon l'invention, illustré par la figure 1, comprend un circuit de commande de luminosité 1 alimenté par une source de tension alternative V0. Cette source de tension permet d'appliquer, par l'intermédiaire d'un circuit de détection D1-C1, une tension -VA, (VA étant positive) à l'entrée du circuit 1. En effet le circuit D1-C1 permet d'obtenir par détection de la tension alternative V0 délivrée par un transformateur THT (non représenté), la tension négative -VA. Le condensateur C1 se charge à travers la diode D1 lors de chaque période de balayage horizontal. Ce condensateur C1 maintient la tension -VA aux bornes du circuit 1.

Le circuit de commande comprend également un circuit d'effacement 2, permettant d'obtenir par l'intermédiaire d'un interrupteur T1 commandé par un signal d'effacement, un effacement du spot lors de son retour à la fin du balayage vertical de l'écran ; ce retour étant appelé généralement retour vertical du spot. Le circuit d'effacement 2 permet également au moyen d'un circuit de protection D2-C2, d'obtenir l'extinction du spot dès qu'il se produit une coupure d'alimentation. Le circuit 2 est prévu pour éviter qu'il ne se produise une tâche lumineuse sur l'écran ne disparaissant qu'au bout de quelques secondes ce qui, à la longue, peut détériorer la surface phosphorescente de l'écran.

Comme illustré sur la figure 1, le circuit de commande de luminosité 1 est constitué par un pont diviseur dont les résistances R1, P1, R2 sont connectées en série entre l'entrée du circuit 1 et la masse. La résistance P1 est variable et permet d'ajuster la tension obtenue à l'aide du pont diviseur à la valeur -kVA que l'on applique sur la grille de luminosité G1 du tube.

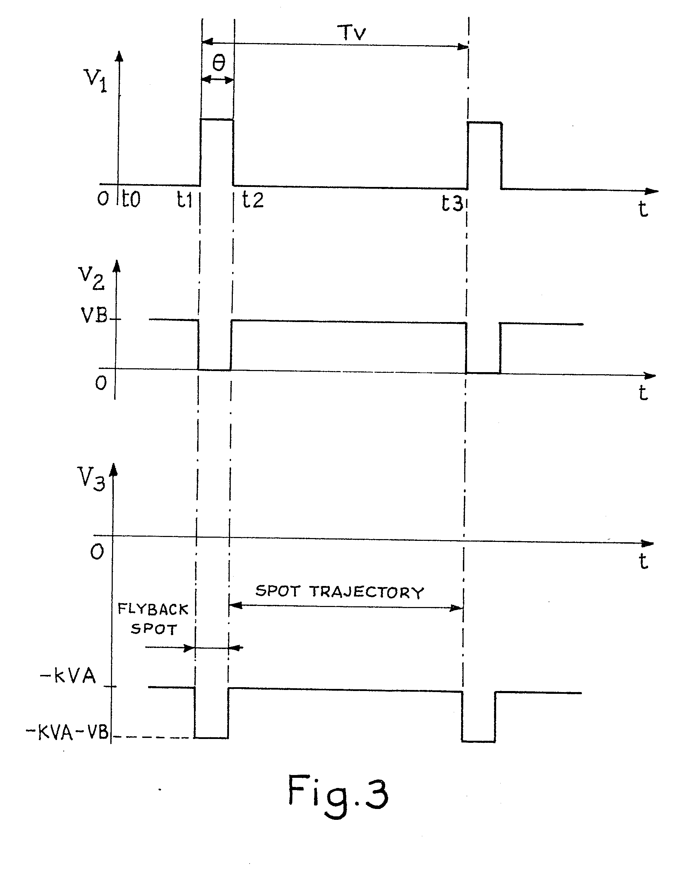

L'effacement du spot pendant le retour du balayage vertical est commandé par l'envoi d'un signal V1 représenté sur le diagramme de la figure 3. Ce signal V1 est un signal périodique dont la période est égale à la période de balayage vertical Tv de l'écran par le spot.

Le signal d'effacement est délivré par une source de tension continue qui envoie une tension +V1 (V1 > 0) à l'instant t1, pendant un intervalle de temps θ, θ étant très petit devant Tv (environ 20 fois plus petit). A l'instant t2 la tension est nulle jusqu'à l'instant t3. A cet instant la tension est à nouveau égale à +V1.

Ce signal +V1 est appliqué sur la base d'un transistor NPN, T1 par l'intermédiaire d'une résistance R3. Le transistor est monté en émetteur commun, l'émetteur est relié à la masse. Le collecteur est relié d'une part à la grille G1 par l'intermédiaire d'un condensateur C2 et d'autre part à une source d'alimentation continue +VB (VB > 0), par l'intermédiaire d'une résistance R4.

Le transistor T1 fonctionne en mode saturé, bloqué pendant la période de balayage vertical Tv. En effet pendant l'intervalle de temps t1-t0, la tension V1 est nulle, le transistor T1 est bloqué (VBE = 0), la tension V2 prise entre le collecteur et la masse est donc égale à VB. Pendant l'intervalle de temps θ, la tension V1 est positive, le transistor est saturé (VBE > 0), la tension V2 prise entre le collecteur et l'émetteur est nulle.

4

Pendant l'aller du spot, c'est-à-dire pendant l'intervalle de temps t3-t2 le signal d'effacement vertical V1 est égal à 0V, le transistor T1 est donc bloqué et le condensateur C2 se charge à travers le réseau R4, D2, P1 à une tension VC2 = VB + kVA - 0,7V.

La tension V3 présente sur la grille G1 est égale à : -kVA + 0,7v. Cette tension de 0,7v est la tension anode-cathode de la diode D2 polarisée en direct.

Pendant le retour du spot, c'est-à-dire pendant l'intervalle de temps $\theta$, le signal d'effacement vertical V1 est positif, le transistor T1 passe à l'état saturé. La tension collecteur-émetteur de T1 devient nulle : V2 = 0. Le condensateur C2 a toujours à ses bornes une tension VC2 = VB + kVA. La diode D2 est bloquée. Par conséquent la tension V3 présente sur la grille G1 est égale à : V3 = VC2 = - VB - kVA, ce qui entraîne l'arrêt de l'émission d'électrons pendant le retour du spot.

Lors de la coupure de l'alimentation de l'écran, les tensions VA et VB s'annulent. Le schéma équivalent du circuit de commande est illustré par la figure 2.

Le condensateur C2 s'est chargé par une tension égale à +kVA + VB. L'impédance RG1 entre la grille et la masse est très élevée et peut être considérée comme infinie. Le condensateur C2 pourrait se décharger à travers les résistances R4, R2, P1. Cependant la diode D2 connectée entre le potentiomètre P2 et la grille G2 est polarisée en inverse, elle est donc bloquée. Le condensateur se décharge dans sa résistance de fuite Rf. La constante de temps est très longue, environ quelques minutes. Ceci permet donc d'appliquer une forte tension négative, V3 = - kVA - VB, pendant quelques minutes sur la grille G1, ce qui provoque une extinction du spot quasi immédiate, et il n'y a aucun risque pour qu'il réapparaisse sur l'écran au bout de quelques secondes puisque la constante de temps de décharge est longue.

Dans notre réalisation particulière représentée sur la figure 1, les divers éléments ont pour valeurs respectives :

5

$+ VA = + 140$ V

$+ VB = + 30$ V

$C1 = 15$ nF

$R1 + R2 + P1 = 470$ K $\Omega$

$C2 = 47$ nF

$R3 = 10$ K $\Omega$

$R4 = 10$ K $\Omega$

Le transistor T1 est un transistor NPN du type MPSA 42 ou équivalent.

La diode D2 est une diode du type 1 N4004 ou équivalent.

REVENDICATIONS

1. Dispositif de commande d'électrode d'un canon électronique comprenant un circuit de commande de luminosité (1) relié à une électrode (G1) et un circuit d'effacement (2) relié à cette électrode, caractérisé en ce que le circuit de commande de luminosité (1) comprend : - un pont diviseur (R1, P1, R2) alimenté par une source de tension continue (-VA) et permettant d'obtenir un premier niveau de tension déterminé ; en ce que le circuit d'effacement (2) comprend : - un interrupteur (T1) recevant un signal de commande (+V1) pour ouvrir ou fermer cet interrupteur (T1) ; le premier niveau de tension déterminé (-kVA) variant en fonction de la position de cet interrupteur (T1) ; et - un circuit de protection (D2-C2), relié au circuit de commande de luminosité (1) et à l'interrupteur (T1), pour maintenir un deuxième niveau de tension déterminé (-kVA-VB) sur l'électrode pendant une durée également déterminée.

2. Dispositif de commande selon la revendication 1, caractérisé en ce que le circuit de commande de luminosité (1) comprend : - une entrée d'alimentation (E) recevant une tension alternative (V0) ; - un détecteur (D1-C1) recevant cette tension alternative V0 et délivrant une tension continue (-VA) ; - un pont diviseur (R1, P1, R2) alimenté par cette tension continue (-VA) et permettant de délivrer le premier niveau de tension déterminé, la sortie de ce pont étant reliée au circuit de protection (D2-C2).

3. Dispositif de commande selon la revendication 1 ou 2, caractérisé en ce que l'interrupteur (T1) est constitué par un transistor NPN (T1) monté en émetteur commun et fonctionnant en mode saturé, bloqué, ce transistor recevant sur sa base le signal d'effacement et délivrant sur son collecteur une tension variable (VB) selon qu'il est saturé ou bloqué, permettant ainsi de faire varier le premier niveau de tension déterminé.

4. Dispositif de commande selon l'une quelconque des revendications 1 à 3, caractérisé en ce que le circuit de protection (D2-C2) comprend une diode dont la cathode est reliée au pont diviseur (R1, P1, R2) et dont

l'anode est reliée à l'électrode (G1), un condensateur (C2) connecté entre l'anode de la diode (D2) et le collecteur du transistor (T1), ce condensateur ayant une constante de temps de décharge suffisamment élevée pour maintenir le deuxième niveau de tension déterminé sur l'électrode pendant le temps déterminé.

VIDEO SIGNAL

K G₁ G₂

BLANKING SIGNAL

Fig.1

Fig.2

Fig.3

0090702

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 706 252  (SABA) <br> * Page 5, dernier alinéa * | 1,2 | H 04 N   3/24 <br> H 04 N   5/68 |
| | --- | | |
| Y | FR-A-1 431 853  (THOMSON) <br> * Figures 1,4 * | 1,3 | |
| | --- | | |
| Y | GB-A-1 059 125  (TELEFUNKEN) <br> * Figures 4,5 * | 1,2 | |
| | --- | | |
| A | GB-A-  945 145  (TELEFUNKEN) | 1 | |
| | ----- | | |

DOMAINES TECHNIQUES
RECHERCHES (Int. Cl. ³)

H 04 N   3/24
H 04 N   5/68
H 04 N   3/20
H 04 N   9/20
G 01 R  13/26

Le présent rapport de recherche a été établi pour toutes les revendications

| Lieu de la recherche <br> LA HAYE | Date d'achèvement de la recherche <br> 27-06-1983 | Examinateur <br> SIX G.E.E. |
|---|---|---|